# EUROPÄISCHE PATENTSCHRIFT

(11) **EP 1 380 867 B1**
(45) Veröffentlichungstag und Bekanntmachung des Hinweises auf die Patenterteilung: **12.09.2007**
(21) Anmeldenummer: 03015062.7
(22) Anmeldetag: 03.07.2003
(51) Int. Cl.: G02B 6/38, B23K 26/00, G02B 6/36

(54) **Steckverbindergehäuse für Lichtwellenleiter**
Housing of a connector plug for optical fibres
Boîtier de connecteur à fiche pour fibres optiques

(30) Priorität: 13.07.2002 EP 02015731
(43) Veröffentlichungstag der Anmeldung: 14.01.2004
(73) Patentinhaber: Tyco Electronics AMP GmbH, 64625 Bensheim (DE)
(72) Erfinder: Bieber, Jörg, 64342 Seeheim-Jugendheim (DE); Engel, Andreas, 64407 Fränkisch Crumbach (DE); Krah, Thorsten, 67122 Altrip (DE)
(74) Vertreter: Patentanwaltskanzlei WILHELM & BECK

(56) Entgegenhaltungen:
- WO-A-00/66345
- WO-A-01/88583
- DE-A- 19 822 990
- DE-A- 19 919 428
- US-A- 4 859 827
- US-B1- 6 206 582
- PATENT ABSTRACTS OF JAPAN Bd. 2002, Nr. 08, 5. August 2002 (2002-08-05) -& JP 2002 107573 A (FURUKAWA ELECTRIC CO LTD:THE), 10. April 2002 (2002-04-10)

## Beschreibung

Die Erfindung betrifft ein Steckverbindergehäuse für Lichtwellenleiter, das aus Kunststoff hergestellt ist und in dem mindestens ein Lichtwellenleiter ortsfest positioniert und mechanisch fixiert ist.

Bei der Kopplung von elektrooptischen Sendern, wie zum Beispiel LED's und Laserdioden und elektrooptischen Empfängern, wie zum Beispiel Photodioden und Phototransistoren mittels einer lichtleitenden Faser, oder bei der optischen Verbindung von zwei getrennten Lichtwellenleitern (z. B. aus Kunststoff) miteinander, ergibt sich das Problem, dass die Stirnflächen der lichtleitenden Fasern zu den korrespondierenden Sende- oder Empfangsflächen sehr genau in Position gebracht und gehalten werden müssen. Dabei müssen die optischen Achsen präzise zur Deckung gebracht werden und sehr nahe aneinander anschließen, d. h. sie müssen sowohl in radialer als auch in axialer Richtung exakt positioniert werden.

Um eine einwandfreie Ankopplung eines Lichtwellenleiters zu einem Sender oder zu einem Empfänger oder eine einwandfreie Kopplung Faser/Faser zu gewährleisten, wird bei den bekannten optischen Steckverbindungen das Ende des Lichtwellenleiters zunächst mit einem Röhrchen, einer so genannten Ferrule (auch Insert genannt) konfektioniert. Dieser Standardkontakt, also die Ferrule mit dem an ihr befestigten Lichtwellenleiter, wird erst anschließend in ein typischerweise aus mindestens zwei Kunststoffteilen bestehendes Steckverbindergehäuse montiert, also positioniert und fixiert. In dem Steckverbindergehäuse müssen dementsprechend eine Aufnahme für den Standardkontakt und Mittel zur Sicherung des Standardkontaktes in der Aufnahme vorgesehen werden. Derartige optische Steckverbindungen sind oft als in Außenstecker integrierbare Module ausgebildet.

Für die beim Standardkontakt erforderliche Befestigung der Ferrule am Lichtwellenleiter bzw. für die anschließende Befestigung des Standardkontaktes in der jeweiligen Umgebung stehen verschiedene Techniken zur Verfügung:

Aus der Offenlegungsschrift DE 28 01 603 A1 ist ein Lichtwellenleiter mit einem Mantel aus thermoplastischem Material bekannt, bei dem an einem Ende eine Verbindungsklemme aus dem gleichen Material befestigt werden soll. Dazu wird vorgeschlagen, die beiden Teile primär mit Ultraschall, oder unter (nicht spezifizierter) Wärmewirkung, zu verschweißen.

In der DE 195 29 527 C1 ist ein Verfahren zur Herstellung einer Faser-Ferrule-Verbindung beschrieben, bei dem eine Faser aus Kunststoff durch wärmebedingtes Aufquellen in einer Ferrule aus Kunststoff festgelegt werden soll. Indem der Mantelfläche der Ferrule zur Erhitzung eine Strahlung zugeführt wird und eine Ferrule verwendet wird, die mit Durchbrüchen von der Mantelfläche bis zur Lichtleiterfaser versehen ist, kann Wärme effektiv zugeführt werden. Die Wärmeenergie wird durch einen konzentrierten Licht- oder Heißluft-Strahl zugeführt, der durch die Durchbrüche unmittelbar an die Faser gelangt. Die Erhitzung wird nur bis zur Aufquelltemperatur, nicht bis zum Schmelzen, durchgeführt.

Die EP 0 590 394 A1 zeigt eine Koppelanordnung, bei der eine Lichtwellenleiterfaser in einer Ferrule aus Kunststoff fixiert und die Ferrule anschließend in einer gegenüber einem Gehäuse justierbaren Justierhülse festgelegt wird. Durch eine zumindest punktweise Warmfügeverbindung, vorzugsweise (konventionelles) Laserverschweißen, gelingt es, eine Befestigung der Justierhülse am Gehäuse zu erzeugen, ohne im Zuge der dabei auftretenden Wärmebelastung die Qualität der vorherigen optischen Justierung wieder zu gefährden.

Schließlich ist es aus der US-A-4 859 827 bekannt, eine Lichtwellenleiterfaser in eine Ferrule zu kleben und die Ferrule durch konventionelles Laserverschweißen im Durchschmelzverfahren an einer, typischerweise metallischen, Muffe zu befestigen. Um nicht durch die ganze Dicke der Muffe durchschmelzen zu müssen, wird vorgeschlagen, die Muffenwand, auf die die Laserstrahlung gerichtet ist, von außen her abzudünnen.

Aus der DE 199 19 428 A1 ist es bekannt, die innovative Fügetechnik des Laser-Durchstrahlschweißens bei einer Ferrule aus Kunststoff anzuwenden, um sie direkt an einem Mantel des Lichtwellenleiters zu verschweißen. Das Laser-Kunststoffschweißen im Durchstrahlverfahren beruht auf der relativ geringeren Absorption von Laserstrahlung in einem ersten Fügepartner, hier: der Ferrule, durch den hindurch die Laserstrahlung deshalb den anderen Fügepartner, hier: den Kunststoff-Mantel des Lichtwellenleiters, erreicht, der eine relativ höhere Absorption aufweist, so dass er den Laserstrahl in Wärme umwandelt, wodurch der Kunststoff an der Fügefläche schmilzt.

In der Publikation "Fügen von Kunststoffen mit Diodenlasern verbessert die Nahtqualität", Maschinenmarkt Das Industriemagazin, 105 Nr. 17, 26. April 1999, Seiten 38 bis 42, wird, ohne Bezug auf Lichtwellenleiter oder Gehäuse als Fügepartner, in einem allgemeinen Kontext u. a. auf prozesstechnische Voraussetzungen beim Durchstrahlverfahren eingegangen, insbesondere werden das Erfordernis eines formschlüssigen Kontaktes zwischen den Fügeteilen und deren Fixierung zueinander, eine Prozessregelung mit Temperaturerfassung, sowie Verfahrensvarianten wie das simultane und kontinuierliche Schweißen diskutiert. Als Anwendungsbeispiel wird die Herstellung von Kunststofffenstern erwähnt.

Schließlich werden in der Publikation "Laserschweißen von Polymerteilen Qualitätsverbesserung von Polymerteilen durch Laserschweißen", 5. (Int.) Kunststoff Sauganlagen Forum, 1998, Seiten 1 bis 12, wiederum ohne Bezug auf Lichtwellenleiter oder Gehäuse als Fügepartner, im Zusammenhang mit dem Durchstrahlverfahren u. a. die Absorptionscharakteristika insbesondere von Polyamid diskutiert. Es wird allgemein darauf hingewiesen, dass verschiedene Verbindungsgeometrien der Fügepartner zur Erzielung einer maximalen Wärmezufuhr im Verbindungsbereich möglich sind und es wird eine online Registrierung der Prozesstemperatur beim Schweißvorgang als unabdingbar bezeichnet.

Die WO 01/88583 A1 offenbart eine Vorrichtung zum Laserverschweißen einer Ferrule eines Lichtwellenleiters mit dem Lichtwellenleiter wobei die Ferrule transparenter als die Schutzbeschichtung des Lichtwellenleiters ausgebildet ist.

Generell ist vor einer Anwendung des Durchstrahlverfahrens zu bedenken, dass dessen Einsatzmöglichkeiten im Allgemeinen sehr von der Fügenahtgeometrie, der Fügestrategie und der Absorption bzw. Transmission abhängen, die selbst wiederum u. a. vom Kunststofftyp, dem Füllstoff und der Wanddicke abhängt, so dass wesentlich auf die Gegebenheiten im Einzelfall abzustellen ist.

Die bekannte, weiter oben in mehreren Varianten beschriebene, indirekte Art der Fixierung des Lichtwellenleiters im Steckverbindergehäuse mittels Standardkontakt hat sich gegenüber früheren Versuchen, die optische Faser direkt - etwa in einer von außen zugänglichen Nut im Gehäuse - einzuklemmen und zu befestigen, durchgesetzt. Die Fixierung mittels Standardkontakt ist ausgereift und sicher, jedoch hinsichtlich der Teile- und Platzökonomie nicht optimal.

Aufgabe der vorliegenden Erfindung ist es, ein insbesondere hinsichtlich der Teile- und Platzökonomie verbessertes Steckverbindergehäuse der eingangs genannten Art zu schaffen.

Erfindungsgemäß wird diese Aufgabe durch eine optische Steckverbindung gemäß Anspruchs 1 gelöst.

Durch die erfindungsgemäß vorgesehene direkte Laserverschwei-ßung eines oder mehrerer Lichtwellenleiter im Inneren des Steckverbindergehäuses, die zu einer unlösbaren, stoffschlüssigen und deshalb sicheren Verbindung zwischen dem Steckverbindergehäuse und dem jeweiligen Lichtwellenleiter führt, ergibt sich zunächst die Einsparung der Ferrulen, die bei keinem der eingeschweißten Lichtwellenleiter mehr erforderlich sind. Erfindungsgemäß kann das Steckverbindergehäuse bei gleicher Schnittstelle optische Komponente/Lichtwellenleiter darüber hinaus kompakter als bisher ausfallen, da keine Aufnahme für einen Standardkontakt vorgesehen werden muss, sondern des Gehäuse anwendungsspezifisch in seinem Bauraum minimiert werden kann.

Aufgrund der direkten Anbindung des Lichtwellenleiters im Steckverbindergehäuse kann dieses - sofern gewünscht - vorteilhaft einteilig ausgebildet sein. Durch die geringere Anzahl von Teilen im Aufbau der optischen Steckverbindung verringern sich auch die Herstellungs- und Montagekosten, da insbesondere die Ferrule nicht mehr wie bisher sicher im Gehäuse verrastet werden muss.

Nach der Erfindung kann das Steckverbindergehäuse als optisches Modul ausgebildet sein, also beispielsweise eine mit Lichtwellenleitern gekoppelte optische Sender/Empfängereinheit realisieren, das selbst - gegebenenfalls zusammen mit weiteren Bauteilen und/oder weiteren Modulen - in einem äußeren Steckverbinder integriert sein kann, der mit einem komplementären Stecker zu einer Steckverbindung zusammenfügbar ist.

Für eine sichere, stoffschlüssige Verbindung ist es gemäß einer Ausgestaltung der Erfindung völlig ausreichend, wenn die Laserverschweißung nur bereichsweise - gegebenenfalls sogar nur an einzelnen Schweißstellen - im Berührungsbereich zwischen Steckverbindergehäuse und Lichtwellenleiter erfolgt.

Eine bevorzugte Ausführungsform lässt sich dadurch erreichen, dass in einer Außenwand des Steckverbindergehäuses mindestens eine die Außenwand bis in eine vorgegebene Tiefe öffnende Aussparung vorgesehen ist, so dass der Laserstrahl durch die dort mit definierter Wanddicke verbliebene Außenwand hindurch Zugang zu dem dahinter liegenden Schweißbereich hat. Dadurch kann auch bei unterschiedlichsten Außengeometrien des Steckverbindergehäuses immer mit denselben Parametern geschweißt werden, da die Wanddicke an der jeweiligen Schweißstelle immer gleich ist.

Der Grundgedanke der Erfindung setzt im Wesentlichen nur voraus, das - jedenfalls während des Schweißvorganges - Teile der Außenwand des Steckverbindergehäuses für Laserlicht der verwendeten Wellenlänge ausreichend transmittierend ausgebildet sind. Dies erlaubt eine vielfältige Gestaltung hinsichtlich der Eigenschaften/Funktionen der Wand des Steckverbindergehäuses, insbesondere kann ein metallisiertes oder teilmetallisiertes Kunststoffgehäuse mit größerer gestalterischer Freiheit als bei Verwendung eines konventionellen äußeren Blechteils hergestellt werden.

Weitere Ausgestaltungen der Erfindung sind in den Unteransprüchen näher gekennzeichnet.

In den folgenden Ausführungsbeispielen wird das Steckverbindergehäuse anhand der Figuren der Zeichnung näher erläutert.
Figur 1, 2 und 3 zeigen, aus jeweils unterschiedlicher Perspektive, eine Ausführungsform des Steckverbindergehäuses als Buchsenstecker,
Figur 4, 5 und 6 zeigen, ebenfalls aus jeweils unterschiedlicher Perspektive, eine Ausführungsform des Steckverbindergehäuses als zum Buchsenstecker gemäß Figur 1, 2 und 3 komplementärer Stiftstecker.

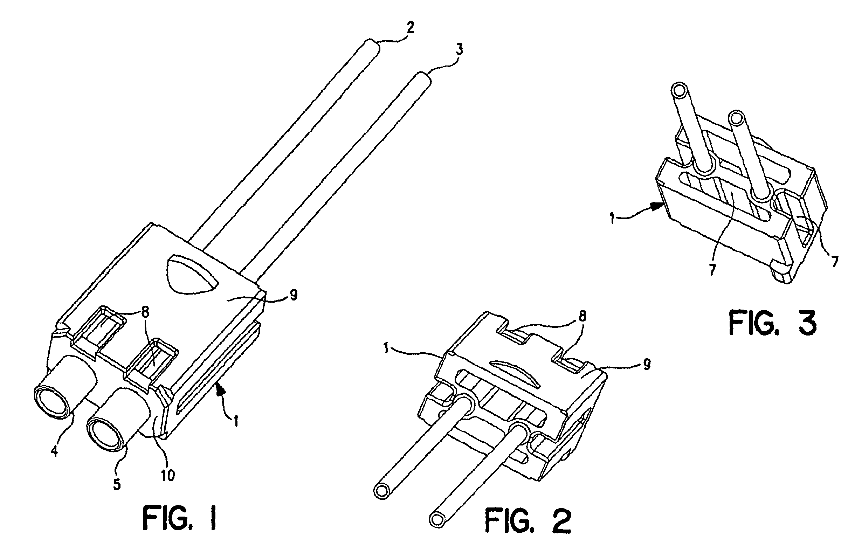

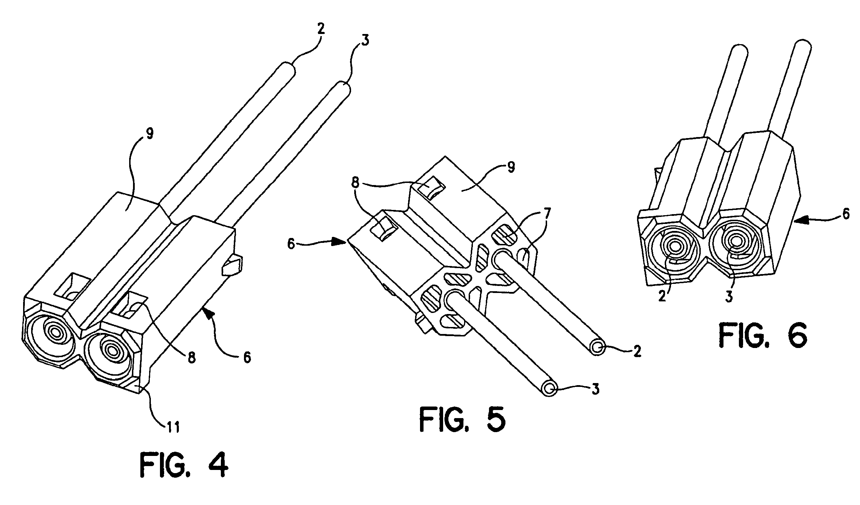

In Figur 1, 2 und 3 ist ein aus Kunststoff bestehendes Buchsengehäuse 1 gezeigt, in welchem die mit einer Ummantelung aus Kunststoff versehenen Lichtwellenleiter 2 und 3 fixiert sind. An das Buchsengehäuse 1 sind an seiner Stirnseite 10 zylindrische Buchsen 4 und 5 angeformt, während an der Stirnseite 11 des Stiftgehäuses 6 gemäß Figur 4, 5 und 6 eine komplementäre Stiftgeometrie ausgebildet ist. Im Buchsengehäuse 1 sind, ebenso wie im Stiftgehäuse 6, Ausnehmungen 7 vorhandenen, die zur Materialentnahme, d. h. zur Vermeidung von Masseanhäufungen im Gehäuse 1 bzw. 6 dienen. Diese Ausnehmungen 7, die je nach Anwendung stark variieren können, sind vor allem in den Figuren 2, 3, und 5 erkennbar.

Weiter sind in den Figuren 1, 2, 4 und 5 Aussparungen 8 in der Außenwand 9 der Gehäuse 1 bzw. 6 erkennbar. Die Lichtwellenleiter 2 und 3 werden bei der Konfektionierung beispielsweise des Buchsengehäuses 1 in das einteilige Buchsengehäuse 1 so eingeführt, dass die Enden der Plastikfasern 2 und 3 im Wesentlichen plan an der dort offenen Stirnseite 10 (in der Mitte der zylindrischen Buchsen 4 bzw. 5) liegen.

Zum Verschweißen kann beispielsweise Laserlicht mit einer Wellenlänge im so genannten nahen Infrarotbereich (800 bis 810 nm) eingesetzt werden. Für eine zugfeste Fixierung ist es ausreichend, für jeden Lichtwellenleiter 2 und 3 einen leicht ovalen, ca. drei bis vier Millimeter langen Schweißpunkt auf den Mantel des Lichtwellenleiters 2 bzw. 3 zu setzen. Der Laser ist so eingestellt, dass, bei einer gegebenen Transmission, eine Schweißung noch durch eine Wandstärke von beispielsweise zwei bis drei Millimetern hindurch gelingt. Diese Schweiß-Parameter werden nicht abhängig vom Anwendungs-Einzelfall jeweils neu eingestellt, sondern es wird die Tiefe der Aussparung 8 vorteilhaft so bemessen, dass eine definierte Wanddicke zur Schweißstelle hin von, in genannten Beispiel, zwei bis drei Millimetern verbleibt.

Die Transmission durch das Buchsengehäuse 1 bzw. das Stiftgehäuse 6 hängt - abgesehen von der Wanddicke - vor allem vom Kunststoffmaterial und von etwaigen Additiven, wie Farbstoffen oder Füllstoffen, ab. Inzwischen sind Farbstoffe verfügbar, die im Wellenlängenbereich sichtbaren Lichts schwarz erscheinen, jedoch eine hohe Durchlässigkeit für Licht aus dem nahen Infrarot zeigen. Schwarze Steckverbindergehäuse sind erfindungsgemäß also ohne weiteres möglich.

Die bisherigen Steckverbindergehäuse wurden insbesondere bei Anwendungen, die eine hohe Datenrate erfordern, beispielsweise im Kfz-, im EDV-Bereich oder in der Unterhaltungselektronik, mit einem äußeren Blechteil zur EMV-Abschirmung versehen. Diese konventionelle Ausgestaltung der Abschirmung ist - gegebenenfalls nach dem Schweißvorgang - auch bei dem erfindungsgemäßen Steckverbindergehäuse möglich. Das Steckverbindergehäuse kann jedoch vorteilhaft auch im so genannten 2-Komponenten-Spritzgießen hergestellt sein. Das Steckverbindergehäuse besteht dann einerseits aus einem laserverschweißbaren, für das verwendete Laserlicht transparentem Material und, andererseits, aus einem Material mit einer anderen technischen Eigenschaft, zum Beispiel EMV-Abschirmung.

Eine weitere Möglichkeit besteht darin, das gesamte Steckverbindergehäuse aus einem einzigen, für das zum Schweißen verwendete Laserlicht transparentem Material spritzzugießen, die Außenwand 9 dann jedoch selektiv zu metallisieren.

Eine vorteilhafte Variante besteht darin, das Steckverbindergehäuse aus einem für das zum Schweißen verwendete Laserlicht transparenten, für das von einer Sendediode emittierte Licht (zum Beispiel rot, 650 nm) aber undurchlässigen Material herzustellen. Dieses Steckverbindergehäuse ist laserverschweißbar, jedoch wird gleichzeitig optisches Übersprechen der Sender- bzw. Empfängerelemente verhindert.

### Bezugszeichenliste

- 1: Buchsengehäuse
- 2: Lichtwellenleiter
- 3: Lichtwellenleiter
- 4: Buchse
- 5: Buchse
- 6: Stiftgehäuse
- 7: Ausnehmungen in 1 bzw. 6
- 8: Aussparungen in 9
- 9: Außenwand von 1 bzw. 6
- 10: Stirnseite von 1
- 11: Stirnseite von 6

## Patentansprüche

1. Optische Steckverbindung mit einem Steckverbinder (1, 6), dessen Steckverbindergehäuse (1, 6) einen Lichtwellenleiter (2, 3) ohne eine diesen umgebende Ferrule aufnimmt, wobei
das Steckverbindergehäuse (1, 6) aus Kunststoff hergestellt ist und in dem mindestens ein Lichtwellenleiter (2, 3) ortsfest positioniert und mechanisch fixiert ist, **dadurch gekennzeichnet, dass**
das Steckverbindergehäuse (1, 6) unmittelbar an einen Mantel des Lichtwellenleiters (2, 3) geschweißt ist, wobei das Steckverbindergehäuse (1, 6) transparenter als der Mantel ausgebildet ist und mittels einer Laserschweißung im Durchstrahlverfahren an den Lichtwellenleiter (2, 3) befestigt ist.

2. Optische Steckverbindung nach Anspruch 1, **dadurch gekennzeichnet, dass** die Laserschweißung zumindest bereichsweise im Berührungsbereich zwischen Steckverbindergehäuse (1, 6) und Lichtwellenleiter (2, 3) erfolgt.

3. Optische Steckverbindung nach Anspruch 2, **dadurch gekennzeichnet, dass** in einer Außenwand (9) des Steckverbindergehäuses (1, 6) mindestens eine die Außenwand (9) bis in eine vorgegebene Tiefe öffnende Aussparung (8) vorgesehen ist, so dass ein die Laserschweißung herstellender Laserstrahl durch die dort mit definierter Wanddicke verbliebene Außenwand (9) hindurch Zugang zu dem dahinter liegenden Schweißbereich hat.

4. Optische Steckverbindung nach einem der Ansprüche 1 bis 3, **dadurch gekennzeichnet, dass** das Steckverbindergehäuse (1, 6) für das zum Schweißen verwendete Laserlicht wenigstens teilweise transparent und für das von den Lichtwellenleiter-Komponenten verwendete Licht undurchlässig ist.

5. Optische Steckverbindung nach einem der Ansprüche 1 bis 4, **dadurch gekennzeichnet, dass** das Steckverbindergehäuse (1, 6) mittels 2-Komponenten-Spritzgießen hergestellt ist, wobei als erste Spritzkomponente ein im Durchstrahlverfahren laserschweißbares Material und als zweite Spritzkomponente ein nicht-laserschweißbares Material vorgesehen ist.

6. Optische Steckverbindung nach einem der Ansprüche 1 bis 5, **dadurch gekennzeichnet, dass** an der Außenwand (9) des Steckverbindergehäuses (1, 6) entweder eine selektive, auf Bereiche ohne dahinter liegenden Schweißbereich beschränkte Metallisierung, oder ein Schirmblech vorgesehen ist.

7. Optische Steckverbindung nach Anspruch 5, **dadurch gekennzeichnet, dass** das nicht-laserschweißbare Material auf eine EMV-Abschirmung hin optimiert ist.

## Claims

1. An optical plug-in connection having a connector (1, 6) whose connector housing (1, 6) accommodates an optical waveguide (2, 3) without a ferrule surrounding it,
the connector housing (1, 6) being made from plastics and at least one optical waveguide (2, 3) being positioned stationarily and fixed mechanically therein, **characterised in that**
the connector housing (1, 6) is welded directly to cladding of the optical waveguide (2, 3), the connector housing (1, 6) being more transparent than the cladding and being attached to the optical waveguide (2, 3) by means of laser welding using the transmission method.

2. An optical plug-in connection according to claim 1, **characterised in that** the laser welding is effected at least in places in the area of contact between connector housing (1, 6) and optical waveguide (2, 3).

3. An optical plug-in connection according to claim 2, **characterised in that** there is provided in an outer wall (9) of the connector housing (1, 6) at least one opening (8) opening the outer wall (9) down to a given depth, such that a laser beam effecting the laser welding has access through the remaining outer wall (9) of a defined wall thickness to the weld zone located therebehind.

4. An optical plug-in connection according to one of claims 1 to 3, **characterised in that** the connector housing (1, 6) is at least partly transparent to the laser light used for welding and is opaque to the light used by the optical waveguide components.

5. An optical plug-in connection according to one of claims 1 to 4, **characterised in that** the connector housing (1, 6) is produced by means of 2-component injection moulding, a material laser-weldable using the transmission method being provided as the first injection moulding component and a non-laser-weldable material being provided as the second injection moulding component.

6. An optical plug-in connection according to one of claims 1 to 5, **characterised in that** either a selective metallic coating, limited to areas without a weld zone located therebehind, or a shield plate is provided on the outer wall (9) of the connector housing (1, 6).

7. An optical plug-in connection according to claim 5, **characterised in that** the non-laser-weldable material is optimised with regard to EMC shielding.

## Revendications

1. Connexion optique enfichable comprenant un connecteur à fiche (1, 6) dont le boîtier de connecteur à fiche (1, 6) reçoit un guide d'onde lumineuse (2, 3) dépourvu d'une férule qui l'entoure, le boîtier de connecteur à fiche (1, 6) étant fabriqué en matière plastique et au moins un guide d'onde lumineuse (2, 3) étant positionné fixement et fixé mécaniquement dans le boîtier, **caractérisée par le fait que** le boîtier de connecteur à fiche (1, 6) est soudé directement sur une gaine du guide d'onde lumineuse (2, 3), le boîtier de connecteur à fiche (1, 6) étant exécuté de manière à être plus transparent que la gaine et étant fixé sur le guide d'onde lumineuse (2, 3) au moyen d'une soudure au laser dans un procédé de cristallographie aux rayons X.

2. Connexion optique enfichable selon la revendication 1, **caractérisée par le fait que** la soudure au laser est réalisée au moins par endroits dans la zone de contact entre le boîtier de connecteur à fiche (1, 6) et le guide d'onde lumineuse (2, 3).

3. Connexion optique enfichable selon la revendication 2, **caractérisée par le fait que** l'on prévoit dans une paroi extérieure (9) du boîtier de connecteur à fiche (1, 6) au moins un évidement (8) ouvrant la paroi extérieure (9) jusqu'à une profondeur prédéfinie, de manière à ce qu'un rayon laser produisant la soudure au laser ait accès, à travers la paroi extérieure (9) demeurée à cet endroit avec une épaisseur de paroi définie, à la zone de soudage située derrière elle.

4. Connexion optique enfichable selon l'une des revendications 1 à 3, **caractérisée par le fait que** le boîtier de connecteur à fiche (1, 6) est transparent, au moins partiellement, à la lumière laser utilisée pour la soudure et est imperméable à la lumière utilisée par les composants du guide d'onde lumineuse.

5. Connexion optique enfichable selon l'une des revendications 1 à 4, **caractérisée par le fait que** le boîtier de connecteur à fiche (1, 6) est fabriqué au moyen d'un moulage par injection à deux composants, un matériau soudable au laser dans le procédé de cristallographie aux rayons X étant prévu en tant que premier composant d'injection et un matériau non soudable au laser étant prévu en tant que deuxième composant d'injection.

6. Connexion optique enfichable selon l'une des revendications 1 à 5, **caractérisée par le fait que** l'on prévoit, sur la paroi supérieure (9) du boîtier de connecteur à fiche (1, 6), soit une métallisation sélective limitée à des zones derrières lesquelles ne se trouve aucune zone de soudage, soit une tôle de protection.

7. Connexion optique enfichable selon la revendication 5, **caractérisée par le fait que** le matériau non soudable au laser est optimisé par rapport au blindage CEM.
